# FASCICULE DE BREVET EUROPEEN

(11) **EP 0 725 023 B1**
(45) Date de publication et mention de la délivrance du brevet: **24.03.1999**
(21) Numéro de dépôt: 96101252.3
(22) Date de dépôt: 30.01.1996
(51) Int. Cl.: B65G 47/91, B65G 49/06

(54) **Appareillage à ventouses pour la préhension et le transport de plaques de grandes dimensions**
Einrichtung mit Saugköpfen zum Greifen und Transportieren von grossen Platten
Installation with suction cups for gripping and transporting large plates

(30) Priorité: 03.02.1995 IT VI950018
(43) Date de publication de la demande: 07.08.1996
(73) Titulaire: Piazza, Antonio, 36015 Schio (Vicenza) (IT)
(72) Inventeur: Piazza, Antonio, 36015 Schio (Vicenza) (IT)
(74) Mandataire: Bettello, Luigi, Dott. Ing.

(56) Documents cités:
- DE-A- 2 308 419
- DE-A- 2 602 622
- DE-U- 7 010 763
- GB-A- 2 169 872

## Description

La présente invention se propose de réaliser un appareillage à ventouses pour la préhension et le transport de plaques à profil plan de grandes dimensions, en verre ou en un autre matériau, lesdites plaques étant insérées dans un magasin à châssis fixes ou à déplacement transversal et longitudinal.

A titre d'exemples on peut citer les magasins de stockage qui sont décrits dans les brevets italiens déposés au nom du présent Demandeur le 18 Septembre 1992 sous les numéros VI92A000135 et VI92A000136. Il va cependant de soi que l'invention est aplicable à tout autre magasin de stockage.

Un appareillage selon le préambule de la revendication 1 est connu du document DE-A-2602622.

L'appareillage suivant l'invention est défini à la revendication 1 et aux revendications 2 à 4 oui sont rattachées à celle-ci.

En bref cet appareillage comprend essentiellement un chariot mobile sur au moins un rail de guidage et de translation, à section appropriée et à profil en plan rectiligne ou courbe. Les déplacements de ce chariot peuvent être commandés par un dispositif d'actionnement motorisé, des moyens de stabilisation anti-basculement étant avantageusement prévus compte-tenu des dimensions importantes et du poids que peuvent affecter les plaques en verre ou autre matériau à manipuler.

Sur le chariot est monté un dispositif de mise en rotation à commande manuelle ou motorisée, oui permet de faire basculer, d'un côté ou de l'autre, les plaques prélevées afin de pouvoir les disposer, en position à plat, verticale ou oblique, sur des moyens de transports, sur des systèmes de transfert ou encore directement sur des machines pour le travail des plaques manutentionnées.

Sur le dispositif de mise en rotation est monté un dispositif de translation à l'intérieur duquel se déplace longitudinalement et horizontalement la barre, le long de laquelle sont prévus des montants qui portent les ventouses de préhension.

Le dessin annexé, donné à titre d'exemple, pemettra de mieux comprendre l'invention, les caractéristiques qu'elle présente et les avantages qu'elle est susceptible de procurer :
Fig. 1 montre en perspective une forme de réalisation de l'appareillage suivant l'invention.
Fig. 2 et 3 montrent en vue en élévation, respectivement en coupe horizontale suivant le plan III-III de fig. 2, une première forme de réalisation du dispositif pour la basculement et la translation de l'ensemble porte-ventouses, ainsi que du système articulé d'élargissement de l'ensemble précité.
Fig. 4 et 5, respectivement 6 et 7, illustrent de la même manière deux autres formes de réalisation correspondant à fig. 2 et 3.

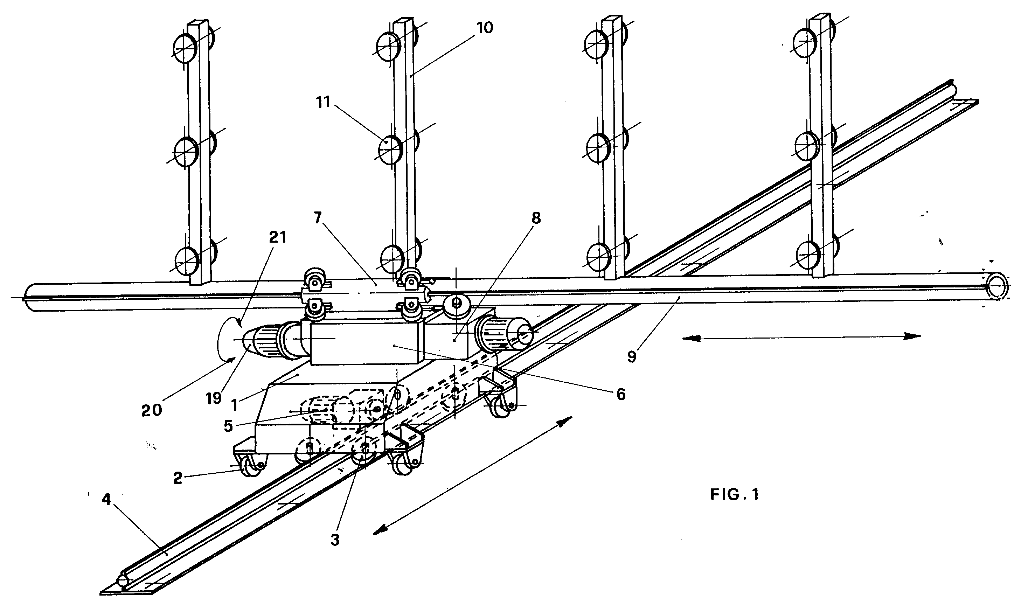

Comme on peut le voir en fig. 1, l'appareillage suivant l'invention comprend un chariot 1 mobile sur des roues 2 prenant appui sur le sol. Ce chariot 1 est guidé par une série de galets 3 oui se déplacent le long d'un rail de guidage 4, par exemple à section circulaire, étant observé que ce rail 4 peut présenter en plan un profil rectiligne ou courbe, en fonction des besoins. Un dispositif d'actionnement 5 convenablement agencé assure le déplacement du chariot 1 le long du rail 4, dans un sens ou dans l'autre.

Sur le chariot 1 est monté un dispositif de mise en rotation 6 qui fait basculer le système de préhension sur un côté ou sur l'autre, suivant les flèches en arc-de-crcle 20 et 21. Ce dispositif est doté d'un moteur 19.

Sur ce dispositif 6 est monté, par exemple de manière articulée, un dispositif de guidage 7 à l'intérieur duquel se déplace une barre 9 commandée par un dispositif de transfert 8, lequel supporte les châssis ou montants 10 sur lesquels sont prévues une série de ventouses 11 propres à prélever les plaques à manipuler renfermées par le magasin de stockage ou destinées à être introduites dans celui-ci.

On comprend sans peine qu'on peut imaginer plusieurs formes de réalisation pour le dispositif de mise en rotation, pour le dispositif de guidage et pour le système de préhension. Bien évidemment l'interchangeabilité des dispositifs précités est assurée.

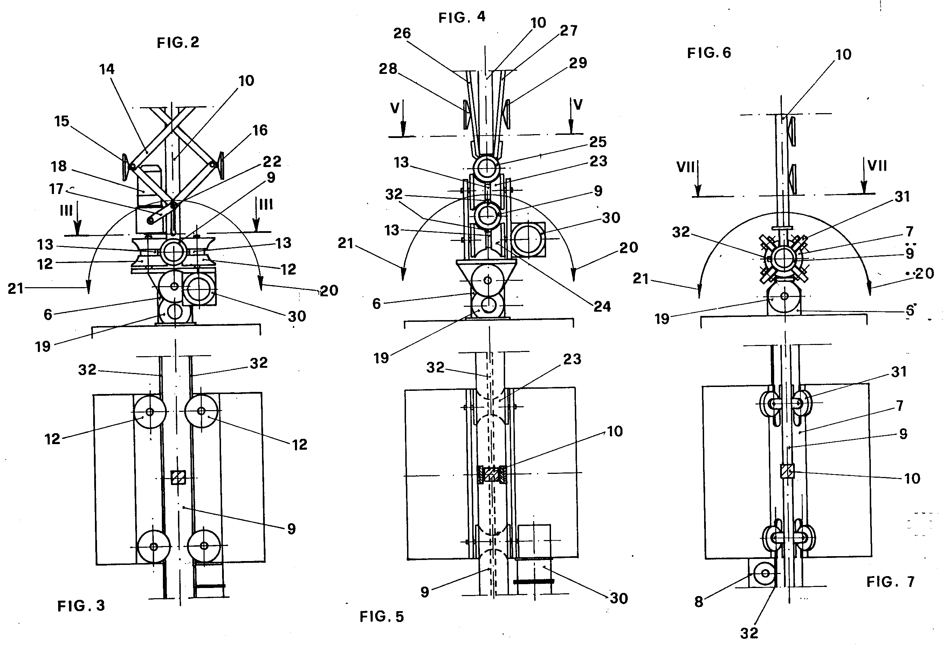

Par exemple, dans la forme de réalisation illustrée en fig. 2 et 3, on peut voir une série de galets de guidage 12 à axe vertical qui portent à mi-hauteur une couronne dentée 13. Ces galets sont mis en rotation à partir d'un dispositif d'actionnement 30 à travers des transmissions et des renvois mécaniques appropriés.

Entre les galets de guidage 12 se déplace une barre 9, supposée à section circulaire dans le cas illustré mais susceptible de présenter tout autre profil en section. Cette barre est solidaire de crémaillères 32 qui reçoivent le mouvement des couronnes dentées 13. Cette barre 9 porte les montants 10 sur lesquels est prévu un système de préhension 14 dont les éléments définissent des triangles ou des quadrilatères suivant qu'on envisage un ou deux côtés pour la préhension ; sur les sommets de ces triangles ou quadrilatères sont fixées des ventouses de préhension 15 et 16.

Ce système de préhension est pourvu d'un levier de commande 17 qui est mu par un dispositif d'actionnement 18 de manière à être lié dans son mouvement vers le bas ou vers le haut à un pivot 22 qui se déplace à l'intérieur d'une lumière de guidage ménagée dans un montant 10. Cet agencement permet au système de préhension de s'élargir ou de se rétrécir transversalement par rapport au montant 10 en vue de prélever les plaques à manipuler.

La variante illustrée en fig. 4 et 5 fait appel à des galets de guidage 23 et 24 à axe vertical, qui sont entraînés en rotation, à travers des moyens appropriés de transmission et de renvoi, par le dispositif d'actionnement 30. Ces galets sont disposés alternativement au-dessus et au-dessous de la barre 9 tandis qu'une seconde barre 25, parallèle à ladite barre 9, est solidaire de celle-ci afin de réaliser un châssis qui porte les montants 10. Sur ce châssis sont fixées des structures 26 et 27 à profil conique qui portent des ventouses 28 et 29, en vue de manipuler les plaques en verre ou autre matériau habituellement stockées dans les magasins usuels.

Dans la variante illustrée en fig. 6 et 7, on peut voir une série de roues ou galets 31 disposés sur le dispositif de guidage 7 suivant deux axes croisés ; ce dispositif 7 renferme la barre 9 qui porte les montants 10 et qui est déplacée par le moyen du dispositif de transfert 8 au moyen d'une crémaillère 32 solidaire de la barre 9.

## Revendications

1. Appareillage à ventouses pour la préhension et le transport de plaques de grandes dimensions en verre ou autre matériau, propre à assurer la translation longitudinale et le basculement orthogonal, dans un sens ou dans l'autre, des plaques insérées dans un magasin de stockage en vue de les déposer, en position à plat, à la verticale ou en oblique, sur des moyens de transfert ou de transport ou sur des machines pour le travail desdites plaques, comprenant un chariot (1) mobile caractérisé en ce que le long d'au moins un rail de guidage et de translation (4) à profil en plan rectiligne ou courbe, lequel chariot est équipé d'un dispositif, manuel ou motorisé, de mise en rotation (6) sur lequel est fixé, de manière éventuellement articulée, un dispositif de translation (7) pour le déplacement d'une barre (9) commandée par un dispositif approprié de transfert (8) et portant des ventouses de préhension (11,15-16,28-29), le déplacement en translation de la barre (9) est longitudinal et horizontal et que le long de la barre (9) sont prévus des montants (10) formant supports pour les ventouses de préhension.

2. Appareillage suivant la revendication 1, caractérisé en ce que le dispositif de translation comprend des galets de guidage (12) à axe vertical, entraînés en rotation par un disositif d'actionnement (30) qui transmet le mouvement à des couronnes dentées (13) prévues à mi-hauteur sur les galets précités et associées à des crémaillères (32) solidaires de la barre (9) qui se déplace ainsi dans un sens ou dans l'autre, les montants (10) portés par cette barre étant équipés d'un système articulé de préhension sur les sommets duquel sont montés les ventouses (15-16) et un levier (17) commandé par un dispositif d'actionnement (18) et lié en son mouvement vertical avec un pivot (22) mobile à l'intérieur d'une lumière de guidage pratiquée dans l'un des montants (10), en permettant ainsi audit système de s'élargir ou de se rétrécir dans le sens transversal par rapport audit montant (10).

3. Appareillage suivant la revendication 1, caractérisé en ce que le dispositif de translation (23,24) commandé par un dispositif d'actionnement (30) coopère avec deux barres intérieure et extérieure (9, 25) qui sont solidaires l'une de l'autre et qui portent les montants (10) sur lesquels sont prévues des structures à profil conique (26,27) portant les ventouses (28, 29).

4. Appareillage suivant la revendication 1, caractérisé en ce que le dispositif de translation (7) est équipé de roues ou galets de guidage (31) disposés suivant deux axes croisés, le mouvement desdites roues ou galets étant obtenu à l'aide du dispositif de transfert (8) qui transmet le mouvement à une crémaillère (32) solidaire de la barre (9) qui porte les montants (10).

## Claims

1. Installation having suction cups for gripping and transporting large panels of glass or other material, adapted to ensure longitudinal translation and tilting at right angles, in one or the other direction, of panels which have been inserted into a storage magazine for the purpose of setting them down, in a flat, vertical or oblique position, onto transfer or transportation means or onto machines for working said panels, comprising a trolley (1) which can be moved horizontally along at least one guiding and translational rail (4) having a profile which is rectilinear or curved in projection, said trolley being equipped with a manual or motorised rotation device (6) onto which is affixed, in an articulated manner if appropriate, a translational device (7) for displacing a bar (9) controlled by a suitable transfer device (8) and bearing gripping suction cups (11, 15-16, 28-29), characterised in that the tranlational displacement of the bar (9) is longitudinal and horizontal, and that along the bar (9) there are provided vertical members (10) which form supports for the gripping suction cups.

2. Installation according to claim 1, characterised in that the translational device comprises guiding rollers (12) with a vertical axis, driven in rotation by an actuating device (30) which transmits the movement to annular gears (13) provided halfway up the aforesaid rollers and associated with racks (32) rigidly joined to the bar (9), which accordingly moves in one or the other direction, the vertical members (10) borne by said bar (9) being equipped with an articulated gripping system at the tops of which are mounted the suction cups (15-16) and a lever (17) which is controlled by an actuating device (18) and connected in its vertical movement to a pivot (22) adapted to move within a guide slot incorporated in one of the vertical members (10), thereby making it possible for said system to become wider or narrower in the transverse direction with respect to said vertical member (10).

3. Installation according to claim 1, characterised in that the translational device (23, 24) controlled by an actuating device (30) cooperates with two respectively internal and external bars (9, 25), which are rigidly joined to one another and which bear the vertical members (10) upon which are provided structures (26, 27) having conical profiles which carry the suction cups (28, 29).

4. Installation according to claim 1, characterised in that the translational device (7) is equipped with guiding wheels or rollers (31) disposed along two intersecting axes, the movement of said wheels or rollers being procured with the aid of the transfer device (8) which transmits the movement to a rack (32) rigidly joined to the bar (9) carrying the vertical members (10).

## Patentansprüche

1. Einrichtung mit Saugköpfen zum Greifen und Transportieren großer Platten aus Glas oder einem anderen Material, welche eine Längsverschiebung und ein orthogonales Kippen von in einer Lagervorrichtung befindlichen großen Platten in die eine oder andere Richtung gewährleistet, um diese in einer flachen, senkrechten oder schrägen Lage auf Verschiebe- oder Transportmittel oder auf Maschinen zu deren Bearbeitung abzusetzen, umfassend einen Wagen (1), der wenigstens entlang einer Führungs- und Verschiebeschiene (4) mit gerader oder gebogener Kontur horizontal beweglich und mit einer manuellen oder motorgetriebenen Dreheinrichtung (6) ausgerüstet ist, auf der eine Translationsvorrichtung (7) zur Verschiebung einer Stange (9) beispielsweise schwenkbar befestigt ist, die von einer geeigneten Verschiebeeinrichtung (8) gesteuert wird und Saugköpfe (11, 15 - 16, 28 - 29) zum Greifen trägt, dadurch gekennzeichnet, daß die Verschiebung zum Bewegen der Stange (9) in Längsrichtung und horizontal erfolgt, und daß entlang der Stange (9) Stäbe (10) angeordnet sind, die Lagerungen für die Saugköpfe zum Greifen bilden.

2. Einrichtung nach Anspruch 1, dadurch gekennzeichnet, daß die Verschiebeinrichtung Führungsrollen (12) mit vertikaler Achse besitzt, die durch eine Antriebsvorrichtung (30) in Drehung versetzt werden, welche die Bewegung auf Zahnkränze (13) überträgt, die auf mittlerer Höhe auf den genannten Rollen angeordnet und mit Zahnstangen (32) in Eingriff stehen, welche fest mit der Stange (9) verbunden sind, die sich in der einen oder anderen Richtung verschiebt, wobei die von dieser Stange getragenen Stäbe (10) mit einem schwenkbaren Greifersystem ausgerüstet sind, auf dessen Spitzen die Saugköpfe (15 - 16) angeordnet sind und ein von einer Antriebsvorrichtung (18) gesteuerter und in seiner Vertikalbewegung min einem Drehzapfen (22) verbundener Hebel (17), wobei der Drehzapfen (22) in einem in den Stäben (10) befindlichen Führungsschlitz beweglich gelagert ist, wodurch das Greifersystem in der Lage ist, sich in bezug auf den Stab (10) quer zu erweitern oder zusammenzuziehen.

3. Einrichtung nach Anspruch 1, dadurch gekennzeichnet, daß die von der Antriebsvorrichtung (30) gesteuerte Verschiebeeinrichtung (23, 24) mit zwei Stangen, einer inneren und äußeren (9, 25) zusammenwirkt, die miteinander verbunden sind und die Stäbe (10) tragen, auf denen Strukturen mit konischem Profil (26, 27) angeordnet sind, die die Saugköpfe (28, 29) tragen.

4. Einrichtung nach Anspruch 1, dadurch gekennzeichnet, daß die Translationsvorichtung (7) mit Führungsrädern oder -rollen (31) ausgerüstet ist, die auf zwei gekreuzten Achsen angeordnet sind, wobei die Bewegung dieser Räder oder Rollen durch die Verschiebeeinrichtung (8) erfolgt, welche die Bewegung auf eine Zahnstange (32) überträgt, die mit der die Stäbe (10) tragenden Stange (9) fest verbunden ist.
